(19) Europäisches Patentamt
European Patent Office
Office européen des brevets

(11) **EP 3 469 118 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **17736573.1**

(22) Anmeldetag: **09.06.2017**

(51) Int Cl.:
*C25B 15/06* (2006.01)       *C25B 1/34* (2006.01)
*C25B 9/18* (2006.01)

(86) Internationale Anmeldenummer:
**PCT/EP2017/064073**

(87) Internationale Veröffentlichungsnummer:
**WO 2017/212014 (14.12.2017 Gazette 2017/50)**

(54) **ELEKTROLYSEUR SOWIE VERFAHREN ZUM BETRIEB EINES ELEKTROLYSEURS**

ELECTROLYZER AND METHOD FOR OPERATING AN ELECTROLYZER

ÉLECTROLYSEUR ET PROCÉDÉ DE FONCTIONNEMENT ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2016 DE 102016210349**

(43) Veröffentlichungstag der Anmeldung:
**17.04.2019 Patentblatt 2019/16**

(73) Patentinhaber: **ThyssenKrupp Uhde Chlorine Engineers GmbH**
**44141 Dortmund (DE)**

(72) Erfinder:
• **KOLBE, Jörg**
  **44789 Bochum (DE)**
• **KÖBERLE, Stephan**
  **01936 Königsbrück (DE)**
• **POLCYN, Gregor**
  **44227 Dortmund (DE)**
• **FUNCK, Frank**
  **58730 Fröndenberg/Ruhr (DE)**
• **STOLP, Wolfram**
  **59071 Hamm (DE)**

(74) Vertreter: **thyssenkrupp Intellectual Property GmbH**
**ThyssenKrupp Allee 1**
**45143 Essen (DE)**

(56) Entgegenhaltungen:
**DE-A1- 2 228 511       DE-A1- 2 657 931**
**US-A1- 2012 202 127**

• **DATABASE WPI Week 197828 Thomson Scientific, London, GB; AN 1978-50342A XP002774211, -& JP S53 61591 A (ASAHI GLASS CO LTD) 2. Juni 1978 (1978-06-02)**
• **DATABASE WPI Week 198536 Thomson Scientific, London, GB; AN 1985-220502 XP002774212, -& JP S60 141883 A (TOYO SODA MFG CO LTD) 26. Juli 1985 (1985-07-26)**

## Beschreibung

Die vorliegende Erfindung betrifft einen Elektrolyseur, umfassend mindestens zwei in Reihe geschaltete und miteinander über Zulauf- und Ablaufsysteme verbundene Elektrolysezellen, wobei jede Elektrolysezelle mindestens eine Ablaufleitung für Elektrolyt aufweist und jede Elektrolysezelle mindestens eine in die Elektrolysezelle führende Zulaufleitung für Elektrolyt aufweist, sowie ein Verfahren zum Betrieb eines Elektrolyseurs, wobei wenigstens eine Ablaufleitung oder wenigstens eine Zulaufleitung mit wenigstens einer Durchbrechung versehen ist, über die Elektrolyt in einem wenigstens zeitweise diskontinuierlichen Volumenstrom mit Tropfenbildung ausfließt.

Elektrolysezellen, welche elektrisch in Reihe geschaltet sind und über gemeinsame Zulauf-/Ablaufsysteme miteinander verbunden sind, besitzen untereinander in der Regel elektrische Ströme über die Elektrolyten (so genannte Streuströme), welche die Effizienz der Elektrolyse herabsetzen, Korrosionen begünstigen und unerwünschte Nebenreaktionen wie zum Beispiel die Bildung von $H_2$ verursachen. Diese Streuströme sind besonders bei der NaCl-Elektrolyse mit Sauerstoffverzehrkathode (so genannte ODC-Technologie) im Katholyt-System feststellbar. Bei hoher Gesamtspannung des Elektrolyseurs ist die Minimierung der Streuströme aus Sicherheitsgründen ($H_2$-Bildung in $O_2$-Atmosphäre) von größter Relevanz.

Grundsätzlich können Streuströme durch die Erhöhung des elektrischen Widerstands in den gemeinsamen Zu- und Abläufen verringert werden. Dies ist zum Beispiel durch die Verringerung des Querschnitts möglich. Allerdings ist dies begrenzt, da ein spezifischer Volumenstrom der Elektrolyte abgeführt werden muss. Ebenso führt die Verlängerung der Ablaufschläuche zu einer Verringerung von Streuströmen. Verfahrensbedingt ist das Ablaufsystem beim NaCl-ODC-Zelldesign kürzer gegenüber der konventionellen NaCl-Technologie und weist u.a. deshalb höhere Streuströme auf. Längere Ablaufsysteme erhöhen jedoch generell nicht nur den elektrischen Widerstand sondern auch die Kosten und den erforderlichen Raumbedarf für die Peripherie. Alternative Systeme zur Erhöhung des elektrischen Widerstands sind unter anderem die Eindüsung eines Gases in das Zu- und/oder Ablaufsystem, so dass es zu einer Blasenbildung kommt oder frei rotierende Schöpfräder, welche einen diskontinuierlichen Volumenstrom erzeugen. Diese Systeme sind jedoch nicht kostenneutral und aufgrund der komplexen und beweglichen Mechanik wartungsintensiv.

In der DE 10 2005 027 735 A1 wird eine elektrochemische Zelle für die Elektrolyse von HCl beschrieben, bei der die Kathodenhalbzelle über einen Flüssigkeitsablauf mit einem Flüssigkeitssammler verbunden ist, wobei ein Einsteckstutzen die Flüssigkeitsableitung in den Sammelbehälter verlängert und der Einsteckstutzen soweit in den Sammelbehälter hineinragt, dass sich die Öffnung des Flüssigkeitsablaufs unter dem Flüssigkeitsspiegel im Sammelbehälter befindet. Somit besteht hier eine elektrisch leitende Verbindung zwischen dem Elektrolyten in der Kathodenhalbzelle und der Flüssigkeit im Flüssigkeitssammler.

Die DE 10 2010 054 643 A1 beschreibt einen Elektrolyseur mit mehreren Einzelelektroseelementen, bei dem der Elektrolytablauf in einen Ablaufsammelkanal mündet. In dieser Druckschrift wird bereits die Problematik angesprochen, dass bei einem derartigen Elektrolyseur ein vergleichsweise hoher Anteil des Stroms durch Streuströme verloren geht. Um den Anteil der Streuströme zu senken, wird hier vorgeschlagen, zur Verbindung des Elektrolytvorlagebehälters mit dem Elektrolytzulauf und zur Verbindung des Überlaufes mit dem Ablaufsammelkanal jeweils einen spiralförmigen Schlauch zu verwenden.

Aus der DE 34 34 328 A1 ist ein Elektrolyseur mit den eingangs genannten Merkmalen bekannt. In dieser Druckschrift wird ein Verfahren zum galvanischen Trennen der elektrolytführenden Sammelleitungen von den Elektrolyträumen eines elektrochemischen Zellenpaketes beschrieben. Der Elektrolyt wird über Tropfenstrecken direkt aus einer Sammelleitung in den Elektrolytraum bzw. direkt aus dem Elektrolytraum in die Sammelleitung geleitet. Eine dort beschriebene Elektrolysezelle weist zwei durch Wände getrennte Gasräume auf. Über eine Sammelleitung wird der Anolyt (die Sole) so zugeführt, dass Tropfen erzeugt werden. Die Sole wird dann über Bohrungen in einer durchbrochenen Leiste, also einem flächigen Gebilde, in eine Verteilerrinne geleitet. Diese Bohrungen liegen parallel nebeneinander und bilden Kanäle in der Platte aus, so dass mehrere beabstandete Tropfenstrecken in jeweils senkrechter Ausrichtung entstehen.

In der DE 34 34 328 wird auch eine Variante gezeigt, in der der Elektrolyt über eine Sammelleitung eintritt und dann über eine Einrichtung, die als Rohrstück mit Löchern bezeichnet wird, versprüht wird und dann auf Leisten des Zellenpaketes gelangt, die wiederum mit Bohrungen versehen sind. Dieses Rohrstück verläuft jedoch in dem Bereich, in dem es Löcher aufweist, horizontal, so dass auch der Elektrolyt in diesem Rohrstück horizontal strömt. Es wird somit kein Flüssigkeitspegel in dem Rohr gebildet, der einen gegebenenfalls variierbaren hydrostatischen Druck erzeugt. Da sich die Löcher im Wesentlichen im nach unten hin gerichteten Bereich des Rohrumfangs befinden, tritt der Elektrolyt unmittelbar nach unten hin aus bzw. erfährt in der Tropfenstrecke keine nennenswerte Richtungsveränderung.

Die Aufgabe der vorliegenden Erfindung besteht darin, einen Elektrolyseur mit den Merkmalen der eingangs genannten Gattung zur Verfügung zu stellen, bei dem durch eine konstruktiv vergleichsweise einfache und kostengünstige Lösung eine Verringerung der Streuströme erzielt wird, bei Meidung der zuvor genannten Nachteile des Standes der Technik.

Die Lösung dieser Aufgabe liefert ein Elektrolyseur mit den Merkmalen des Anspruchs 1.

Erfindungsgemäß wird vorgeschlagen, dass die Ablaufleitung oder die Zulaufleitung als im Wesentlichen vertikal ausgerichtetes Rohr mit wenigstens einer Durchbrechung im Umfangsbereich ausgebildet ist.

Aus dieser wenigstens einen Ablaufleitung oder wenigstens einen Zulaufleitung mit wenigstens einer Durchbrechung fließt der Elektrolyt in einem wenigstens zeitweise diskontinuierlichen Volumenstrom mit Tropfenbildung aus, wobei die Strömung anfänglich beim Austritt zunächst etwa horizontal und in etwa radialer Richtung am Umfang aus der Ablaufleitung oder Zulaufleitung erfolgt und dann durch die Schwerkraft bedingt eine Umlenkung erfährt. Das Ausströmen des Elektrolyten aus einer einzelnen Durchbrechung der Ablaufleitung oder Zulaufleitung erfolgt somit in einer Kurvenlinie, etwa vergleichbar mit einer Wurfparabel.

Das in der vorliegenden Anmeldung verwendete Merkmal "im Wesentlichen vertikal" ist so zu verstehen, dass dieses ein genau vertikal ausgerichtetes Rohr umfasst sowie auch ein Rohr mit einer Winkelabweichung der Rohrachse zur Senkrechten von maximal 40° und "vorzugsweise von maximal 15°.

Die erfindungsgemäße Lösung ermöglicht eine Minimierung von Streuströmen bei einer Anordnung von elektrisch in Reihe geschalteten Elektrolysezellen, indem ein möglichst hoher elektrischer Widerstand im Elektrolytstrom erzeugt wird. Es wird eine kompakte Anordnung geschaffen mit wenig zusätzlichem Raumbedarf. Zudem ist die erfindungsgemäße Lösung weitgehend kostenneutral und wartungsarm.

Erfindungsgemäß wird die kontinuierliche Stromleitung zwischen zwei Elektrolysezellen des Elektrolyseurs über den ablaufenden Elektrolyten und/oder gegebenenfalls auch über den zulaufenden Elektrolyten signifikant herabgesetzt oder vollständig unterbrochen. Da sich eine Tropfenbildung ergibt, steht die ausfließende Elektrolytlösung anders als bei einem kontinuierlich ausfließenden Flüssigkeitsstrom mit der Flüssigkeit im Flüssigkeitssammler nicht mehr in elektrisch leitender Verbindung. Durch diesen Effekt der temporären Unterbrechung der Stromleitung wird der elektrische Widerstand signifikant erhöht und Streuströme zwischen dem Ablaufsystem und den einzelnen Elektrolysezellen werden weitestgehend verhindert oder minimiert.

Es wird also gemäß der Erfindung ein Strahlzerfall des aus einer Elektrolysezelle in einen Flüssigkeitssammler ablaufenden Elektrolyten erzeugt. Würden keine Tropfen gebildet, sondern ein kontinuierlicher Flüssigkeitsstrom würde abfließen, dann wäre in einem solchen Flüssigkeitsstrom, der dann die Elektrolysezelle mit einem Sammlersystem verbinden würde, eine kontinuierliche Stromleitung möglich. Dies soll durch die erfindungsgemäße Tropfenbildung, also den Strahlzerfall, vermieden werden.

Gemäß der Erfindung ist die Ablaufleitung oder die Zulaufleitung als im Wesentlichen vertikal ausgerichtetes Rohr mit wenigstens einer Durchbrechung im Umfangsbereich ausgebildet. Bei dieser bevorzugten Variante tritt die Flüssigkeit nicht axial aus der bevorzugt etwa rohrförmigen Ablaufleitung aus, sondern in etwa radial.

Gemäß einer bevorzugten Weiterbildung der Erfindung ist eine Anzahl von zwei oder mehreren etwa nebeneinander oder übereinander oder zueinander versetzt liegenden voneinander beabstandeten Durchbrechungen im Umfangsbereich einer rohrförmigen Zulaufleitung vorgesehen. Mehrere solcher Durchbrechungen können alternativ oder gleichzeitig auch in axialer Richtung der Ablaufleitung gesehen voneinander beabstandet angeordnet sein. Die genannten Durchbrechungen können unterschiedlich groß sein und somit unterschiedliche Austrittsquerschnittsflächen aufweisen.

Der erfindungsgemäße Effekt des Strahlzerfalls bzw. der Tropfenbildung wird bevorzugt insbesondere dadurch erreicht, dass die Summe der Austrittsquerschnittsflächen der Durchbrechungen in der gleichen Ablaufleitung oder Zulaufleitung geringer ist als der Durchflussquerschnitt stromaufwärts der Durchbrechungen in dieser Ablaufleitung oder Zulaufleitung, in der sich diese Durchbrechungen befinden. Dadurch wird ein Flüssigkeitsstand in der Ablaufleitung/Zulaufleitung erzielt, welcher einen Vordruck für die austretende Flüssigkeit erzeugt.

Die tatsächliche konstruktive Auslegung der Ablaufleitung/Zulaufleitung hängt im Rahmen der vorliegenden Erfindung von einer Anzahl von Parametern ab, insbesondere von der Anzahl der Durchbrechungen in der Ablaufleitung, von deren Größe, deren Position und deren Abstand untereinander, von den jeweiligen Volumenströmen und Drücken, von der Länge der Ablaufleitung/Zulaufleitung, deren Durchmesser und von der Art und den Eigenschaften des verwendeten Elektrolyts.

Die erfindungsgemäße Lösung ist anwendbar sowohl bei Gas-mitführenden Elektrolytströmen (z.B. Dünnsole, mitführendes $Cl_2$) als auch bei rein flüssigen Elektrolytströmen, beispielsweise NaOH bei der NaCl-Elektrolyse mit Sauerstoffverzehrkathode.

Bei Gas-mitführenden Elektrolytströmen sind beispielsweise zusätzliche Durchbrechungen in einem weiter stromaufwärts liegenden Bereich einer Ablaufleitung vorteilhaft, über die dann insbesondere das Gas austreten kann.

Das Prinzip des Strahlzerfalls bzw. der Tropfenbildung gemäß der vorliegenden Erfindung kann sowohl für einen Anolyten als auch für einen Katholyten eines Elektrolyseurs angewandt werden. Eine bevorzugte Weiterbildung der Erfindung sieht somit vor, dass wenigstens eine Ablaufleitung oder wenigstens eine Zulaufleitung für Anolyt und wenigstens eine Ablaufleitung oder wenigstens eine Zulaufleitung für Katholyt mit wenigstens einer Durchbrechung versehen ist.

Gemäß einer bevorzugten Weiterbildung der Erfindung ist die Ablaufleitung und/oder die Zulaufleitung als Einsteckrohr ausgebildet. Beispielsweise kann die Ablaufleitung in eine Art Leitungsverteiler (header) der Elektrolysezelle eingesteckt oder eingehängt sein, derart, dass ein oberer Bereich der Ablaufleitung in dem beispielsweise etwa plattenförmigen Leitungsverteiler gehalten ist und dieses Einsteckrohr, d.h. die rohrförmige Ablaufleitung dann aus dem Leitungsverteiler nach unten hin herausragt und die Flüssigkeit über Durchbrechungen in der Ablaufleitung, die sich folglich in einer Ebene unterhalb der Ebene des Leitungsverteilers befinden, etwa radial, d.h. anfänglich etwa seitlich austritt.

Geeignet ist die Anwendung der vorliegenden Erfindung insbesondere bei einem Elektrolyseur, der für eine NaCl-Elektrolyse, insbesondere für eine NaCl-Elektrolyse mit Sauerstoffverzehrkathode vorgesehen ist.

Gegenstand der vorliegenden Erfindung ist weiterhin ein Verfahren zum Betrieb eines Elektrolyseurs umfassend mindestens zwei in Reihe geschaltete und miteinander über Zulauf- und Ablaufsysteme verbundene Elektrolysezellen, wobei über das Zulauf- und Ablaufsystem ein mindestens zwei Elektrolysezellen versorgender Volumenstrom wenigstens eines Elektrolyten fließt, bei dem man erfindungsgemäß einen wenigstens zeitweise diskontinuierlichen Volumenstrom des Elektrolyten mit Tropfenbildung erzeugt.

Dabei erzeugt man einen wenigstens zeitweise diskontinuierlichen Volumenstrom des Elektrolyten mit Tropfenbildung dadurch, dass man wenigstens eine Ablaufleitung oder wenigstens eine Zulaufleitung so gestaltet, dass die Summe der Austrittsquerschnittsflächen dieser Ablaufleitung oder Zulaufleitung geringer ist als der Durchflussquerschnitt stromaufwärts in dieser Ablaufleitung oder Zulaufleitung. Da der Ausgangsquerschnitt erfindungsgemäß kleiner ist als der Eingangsquerschnitt, ist eine höhere (mittlere) Fließgeschwindigkeit am Ausgangsquerschnitt erforderlich, um einen konstanten Volumenstrom zu erzielen. Der erforderliche Vordruck hierzu ergibt sich durch den Flüssigkeitsstand aufgrund der Querschnittsverengung. Für den erfindungsgemäßen Strahlverfall muss sich eine entsprechende Fließgeschwindigkeit am Austritt einstellen, welche von verschiedenen konstruktiven, prozesstechnischen und elektrolytrelevanten Parametern wie Durchmesser, Volumenstrom, Viskosität etc. abhängt.

Der diskontinuierliche Volumenstrom wird durch vergleichsweise kleine Durchbrechungen/Austrittsöffnungen begünstigt. Um den gesamten Volumenstrom des ausfließenden Elektrolyten zu erhöhen, verwendet man dann vorzugsweise eine Mehrzahl dieser kleinen Austrittsöffnungen

Bei einer beispielsweise etwa vertikal angeordneten etwa rohrförmigen Ablaufleitung mit Durchbrechungen im Umfangsbereich kann der Flüssigkeitsaustritt zunächst etwa radial erfolgen und anschließend ergibt sich für den Strömungsweg der austretenden Tropfen aufgrund der nach dem Durchtritt durch die Durchbrechungen einwirkenden Schwerkraft eine Kurvenbahn, deren Verlauf von dem Vordruck im Bereich des Auslasses abhängt.

Gegenstand der vorliegenden Erfindung ist weiterhin die Verwendung eines Elektrolyseurs mit den vorgenannten Merkmalen in Elektrolyseverfahren, bei denen mehrere Zellen hintereinander angeordnet sind, beispielsweise in der NaCl-Elektrolyse, insbesondere in der NaCl-Elektrolyse mit Sauerstoffverzehrkathode, der HCl-Elektrolyse, Redoxflow- oder Wasserelektrolyse.

Nachfolgend wird die vorliegende Erfindung anhand von Ausführungsbeispielen unter Bezugnahme auf die beiliegenden Zeichnungen näher beschrieben. Dabei zeigen

Figur 1 eine schematisch stark vereinfachte Prinzipdarstellung eines Elektrolyseurs mit mehreren Elektrolysezellen gemäß der vorliegenden Erfindung;

Figur 2 einen vergrößerten Detailausschnitt eines Ausschnitts aus der Darstellung von Figur 1 gemäß einer ersten beispielhaften Ausführungsform der Erfindung;

Figur 3 einen vergrößerten Detailausschnitt eines Ausschnitts aus der Darstellung von Figur 1 gemäß einer zweiten beispielhaften Ausführungsform der Erfindung;

Figur 4 eine schematisch vereinfachte Draufsicht auf ein Einsteckrohr gemäß einem Ausführungsbeispiel der vorliegenden Erfindung;

Figur 5 eine schematisch vereinfachte Seitenansicht eines erfindungsgemäßen Einsteckrohrs in einem Leitungsverteiler eines Elektrolyseurs.

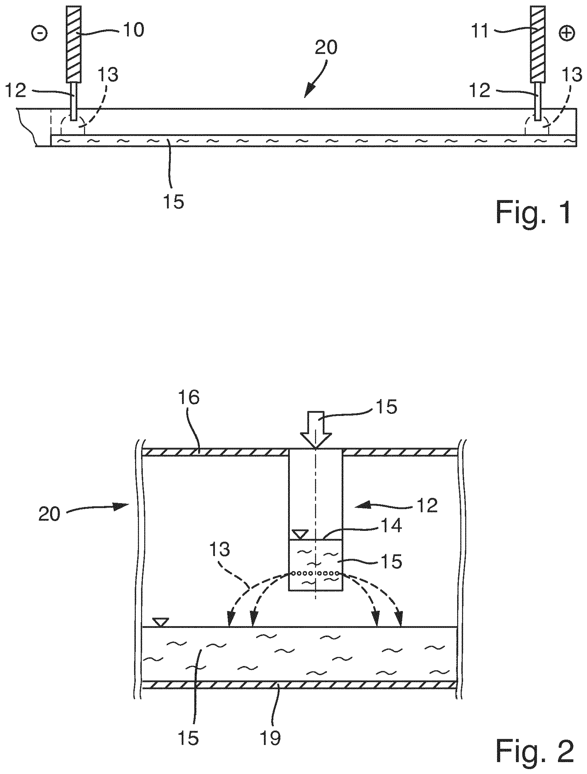

Nachfolgend wird zunächst auf die Figur 1 Bezug genommen und anhand dieser schematisch stark vereinfachten Darstellung wird beispielhaft eine mögliche Ausführungsvariante eines erfindungsgemäßen Elektrolyseurs näher erläutert. Es handelt sich hier nur um eine Prinzipskizze, in der links ein erstes Element 10 eines Elektrolyseurs dargestellt ist und in der rechts ein letztes Element 11 eines Elektrolyseurs dargestellt ist, welcher in der Regel eine Anzahl von in Reihe geschalteten Elektrolysezellen aufweist, welche jeweils mit dem gleichen Elektrolyten betrieben werden. Der Elektrolyt 15 fließt daher aus dem ersten Element 10 der ersten Elektrolysezelle über eine Ablaufleitung 12 aus und gelangt in einen Flüssigkeitssammler 20, in den auch der ablaufende Elektrolyt 15 aller übrigen und somit auch des letzten Elements 11 der letzten Elektrolysezelle abfließt.

Durch die erfindungsgemäße Anordnung soll erreicht werden, dass über den Elektrolyten 15, welcher die Elektrolysezellen durchströmt und der in den Flüssigkeitssammler 20 gelangt, keine permanente elektrisch leitende Verbindung entsteht, welche zu unerwünschten Streuströmen führen würde. Dies erzielt man erfindungsgemäß dadurch, dass man den Flüssigkeitsstrom des aus dem ersten Element 10 austretenden Elektrolyten unterbricht, indem man eine Strahlzerlegung mit Tropfenbildung induziert. Dadurch gelangt der aus der jeweiligen Elektrolysezelle austretende Elektrolyt 15 in Form eines tropfenförmigen Flüssigkeitsstroms 13 in den Flüssigkeitssammler 20.

Das Prinzip der Strahlzerlegung wird nachfolgend anhand eines ersten Beispiels unter Bezugnahme auf die Detailansicht gemäß Figur 2 näher erläutert. Die stark schematisch vereinfachte Darstellung zeigt einen Flüssigkeitssammler 20, der ein Behältnis für Elektrolyt 15 bildet, mit einem Boden 19und einem Leitungsverteiler 16, der den Flüssigkeitssammler 20 nach oben hin abschließt und parallel und mit Abstand zum Boden 19 verläuft. Beispielsweise ist der Leitungsverteiler 16 etwa plattenförmig, erstreckt sich in etwa horizontaler Richtung und bildet eine Art Deckplatte des Flüssigkeitssammlers 20. In dem Flüssigkeitssammler 20 befindet sich ein Elektrolyt 15, dessen Flüssigkeitspegel eine gewisse Höhe hat wie durch den Pfeil in Figur 2 gekennzeichnet.

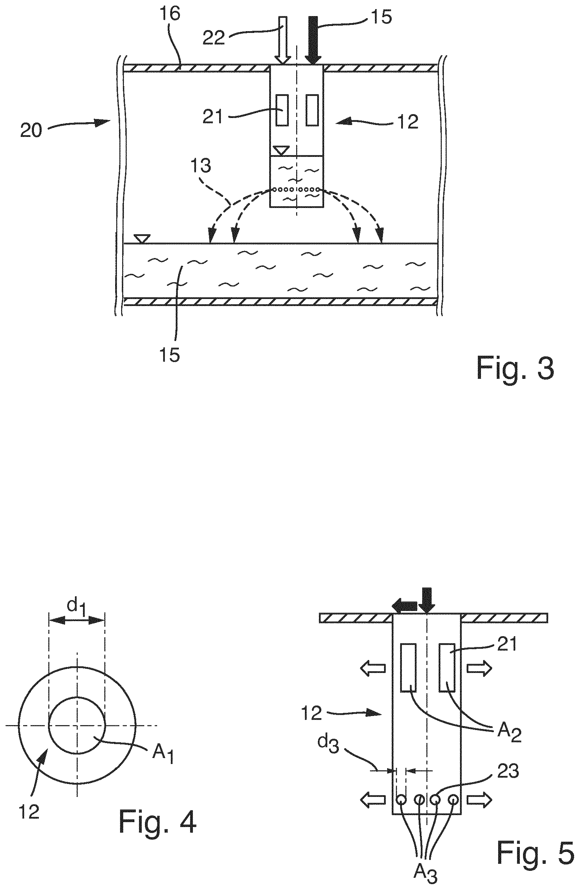

In den Leitungsverteiler 16 ist ein Einsteckrohr 12 eingehängt, welches eine rohrförmige Ablaufleitung für denjenigen Elektrolyten 15 bildet, welcher aus der über dem Flüssigkeitssammler liegenden Elektrolysezelle (in Figur 2 nicht dargestellt) abläuft. In dieser etwa vertikal ausgerichteten rohrförmigen Ablaufleitung (dem Einsteckrohr 12) bildet sich ein Flüssigkeitspegel 14 aus, wie durch den Pfeil in Figur 2 dargestellt. Es werden ein definierter Durchflussquerschnitt im Einsteckrohr 12 sowie eine definierte Anzahl und Größe der Durchbrechungen im Einsteckrohr gewählt, was später unter Bezugnahme auf die Figuren 4 und 5 noch genauer erläutert wird. Wie in Figur 2 erkennbar weist das Einsteckrohr 12 in einer Höhe unterhalb des Flüssigkeitspegels 14 seitliche Durchbrechungen (Löcher) auf, aus denen Elektrolyt austreten kann. Diese Durchbrechungen liegen am Umfang des beispielsweise etwa zylindrischen Einsteckrohrs 12. Hier wird ein Strahlzerfall des Elektrolyten mit Tropfenbildung erzielt, so dass der Elektrolyt in einem tropfenförmigen Flüssigkeitsstrom 13 aus dem Einsteckrohr 12 ausfließt. Bei dieser Ausführungsvariante soll kein Gas über diese Zellenöffnung austreten. Bei NaCl-ODC beispielsweise ist ein separater Gasaustrittsstutzen an der Kathodenhalbschale vorgesehen.

Nachfolgend wird auf die Figur 3 Bezug genommen, die eine gegenüber Figur 2 etwas abgewandelte Ausführungsvariante der Erfindung zeigt, welche insbesondere für Gas-mitführende Elektrolytströme geeignet ist. Der Aufbau des Flüssigkeitssammlers 20 ist im Prinzip analog wie zuvor anhand von Figur 2 beschrieben. Jedoch ist hier das als Ablaufleitung dienende in den Leitungsverteiler 16 eingehängte Einsteckrohr 12 etwas abgewandelt. Während bei der zuvor beschriebenen Variante gemäß Figur 2 von oben her nur flüssiger Elektrolyt in das Einsteckrohr 12 eintritt, strömt bei der Variante von Figur 3 zusätzlich ein Gasstrom 22 ein, der von dem Elektrolyten 15 mitgeführt wird. Dies ist durch die beiden oberen Pfeile in Figur 3 angedeutet. Neben den unteren Durchbrechungen für den tropfenförmigen Flüssigkeitsstrom 13 weist das Einsteckrohr 12 weitere obere Öffnungen 21 oder Durchbrechungen auf, die bevorzugt etwas größer sind als die unteren Durchbrechungen und die dazu dienen, das von dem Elektrolyten mitgeführte Gas austreten zu lassen und zwar in den Gasraum oberhalb des Flüssigkeitspegels im Flüssigkeitssammler 20.

Nachfolgend werden unter Bezugnahme auf die Figuren 4 und 5 beispielhaft Abmessungen und geometrische Verhältnisse bei einer Ablaufleitung 12, wie sie im Rahmen der vorliegenden Erfindung verwendbar ist, näher erläutert. Es handelt sich beispielsweise bei der Ablaufleitung 12 für Elektrolyten um ein Einsteckrohr wie es zuvor anhand der Figuren 2 und 3 beschrieben wurde. Figur 4 zeigt die Draufsicht. Das Einsteckrohr 12 hat einen Durchmesser $d_1$ und eine Eintrittsquerschnittsfläche/Durchflussquerschnittsfläche $A_1$ (siehe Figur 4).

Figur 5 zeigt die diversen Öffnungen und Durchbrechungen des Einsteckrohrs 12, wobei aus den oberen Öffnungen 21 ein Gasstrom austreten kann. Die Summe der Austrittsquerschnittsflächen dieser oberen Öffnungen 21 ist mit $A_2$ bezeichnet. Im unteren Bereich befindet sich eine Anzahl von am Umfang des Einsteckrohres 12 angeordneten kleineren Durchbrechungen 23, aus denen der flüssige Elektrolyt in Tropfenform austritt. Diese kleineren Durchbrechungen 23 haben in der Summe insgesamt eine Austrittsquerschnittsfläche $A_3$. Die Öffnungen 21 für den Gasaustritt sollten vergleichsweise groß sein, um eine ausreichende Entlüftung des Gases zu ermöglichen. Die Durchbrechungen/Löcher 23 für das Abfließen des Elektrolyten sind hingegen im Durchmesser vergleichsweise klein.

Vorzugsweise gelten erfindungsgemäß die nachfolgenden Bedingungen:

$$A_2 \; > \; A_1 \; > \; A_3$$

sowie $d_1 \; > > \; d_3$

Die Durchbrechungen/Löcher 23 sind also bevorzugt im Durchmesser wesentlich kleiner als der Eintrittsdurchmesser $d_1$ des Einsteckrohrs 12. Beim Austritt des Elektrolyten aus dem Einsteckrohr 12 kommt es zu einer Tropfenbildung. Bei dieser Ausführungsvariante muss der sich im Einsteckrohr 12 ausbildende Flüssigkeitspegel unterhalb der oberen Öffnungen 21 liegen, um zu vermeiden, dass durch diese hindurch ein Flüssigkeitsaustritt erfolgt. Somit ist für den Austritt des Elektrolyten nur die Summe der Austrittquerschnittsflächen der kleinen Durchbrechungen 23 relevant. Um einen Flüssigkeitsstand in dem Einsteckrohr zu erzeugen, gilt hier die Bedingung, dass die Summe der Austrittsquerschnittsflächen $A_3$ der Durchbrechungen 23 in dem die Ablaufleitung bildenden Einsteckrohr 12 geringer sein muss als der Durchflussquerschnitt $A_1$ im Eintrittsbereich des Einsteckrohrs 12.

**Bezugszeichenliste:**

10     erstes Element
11     letztes Element
12     Ablaufleitung/Einsteckrohr
13     tropfenförmiger Flüssigkeitsstrom
14     Flüssigkeitspegel
15     Elektrolyt
16     Leitungsverteiler
19     Boden
20     Flüssigkeitssammler
21     Öffnungen
22     Gasstrom
23     Durchbrechungen
$d_1$     Innendurchmesser Einsteckrohr
$A_1$     Eintrittsquerschnittsfläche Einsteckrohr
$A_2$     Austrittsquerschnittsfläche der oberen Öffnungen
$A_3$     Austrittsquerschnittsfläche der unteren Durchbrechungen
$d_3$     Durchmesser der einzelnen Durchbrechungen 23

**Patentansprüche**

1.   Elektrolyseur umfassend mindestens zwei elektrisch in Reihe geschaltete und miteinander über Zulauf- und Ablaufsysteme verbundene Elektrolysezellen, wobei jede Elektrolysezelle mindestens eine Ablaufleitung für Elektrolyt aufweist und jede Elektrolysezelle mindestens eine in die Elektrolysezelle führende Zulaufleitung für Elektrolyt aufweist, wobei wenigstens eine Ablaufleitung (12) oder wenigstens eine Zulaufleitung mit wenigstens einer Durchbrechung (23) versehen ist, über die Elektrolyt (15) in einem wenigstens zeitweise diskontinuierlichen Volumenstrom (13) mit Tropfenbildung ausfließt, **dadurch gekennzeichnet, dass** die Ablaufleitung (12) oder die Zulaufleitung als Rohr ausgebildet ist, welches vertikal ausgerichtet ist oder dessen Rohrachse eine Winkelabweichung zur Senkrechten von maximal 40 ° hat, wobei das Rohr mit wenigstens einer Durchbrechung (21, 23) im Umfangsbereich ausgebildet ist.

2.   Elektrolyseur nach Anspruch 1, **dadurch gekennzeichnet, dass** eine Anzahl von zwei oder mehreren etwa nebeneinander oder übereinander oder zueinander versetzt liegenden voneinander beabstandeten Durchbrechungen (21, 23) im Umfangsbereich einer rohrförmigen Ablaufleitung (12) oder Zulaufleitung vorgesehen ist.

3.   Elektrolyseur nach einem der Ansprüche 1 oder 2, **dadurch gekennzeichnet, dass** wenigstens eine erste Durchbrechung (23) und wenigstens eine in axialer Richtung der Zulaufleitung oder der Ablaufleitung (12) gesehen davon beabstandete zweite Durchbrechung (21) vorgesehen ist.

4.   Elektrolyseur nach einem der Ansprüche 1 bis 3, **dadurch gekennzeichnet, dass** wenigstens zwei Durchbrechungen (21, 23) mit unterschiedlichen Austrittsquerschnittsflächen in der gleichen Ablaufleitung (12) oder Zulaufleitung vorgesehen sind.

5.   Elektrolyseur nach einem der Ansprüche 2 bis 4, **dadurch gekennzeichnet, dass** die Summe der Austrittsquerschnittsflächen ($A_3$) der Durchbrechungen (23) in der gleichen Ablaufleitung (12) oder Zulaufleitung geringer ist als der Durchflussquerschnitt ($A_1$) stromaufwärts der Durchbrechungen (23) in dieser Ablaufleitung (12) oder Zulaufleitung, in der sich diese Durchbrechungen (23) befinden.

6.   Elektrolyseur nach einem der Ansprüche 1 bis 5, **dadurch gekennzeichnet, dass** dieser einen Gas-mitführenden oder einen rein flüssigen Elektrolytstrom (15) enthält.

7.   Elektrolyseur nach Anspruch 6, **dadurch gekennzeichnet, dass** bei einem Gas-mitführenden Elektrolytstrom (15) die Ablaufleitung (12) oder Zulaufleitung wenigstens eine zusätzliche Durchbrechung (21) in einem stromaufwärts von wenigstens einer ersten Durchbrechung (23) liegenden Bereich aufweist, wobei die zusätzliche Durchbrechung (21) insbesondere für einen Gasaustritt von im Elektrolytstrom mitgeführtem Gas dient.

8.   Elektrolyseur nach einem der Ansprüche 1 bis 7, **dadurch gekennzeichnet, dass** dieser Elektrolysezellen mit einer Sauerstoffverzehrkathode umfasst.

9.   Elektrolyseur nach einem der Ansprüche 1 bis 8, **dadurch gekennzeichnet, dass** wenigstens eine Ablaufleitung (12) oder wenigstens eine Zulaufleitung für Anolyt und wenigstens eine Ablaufleitung (12) oder wenigstens eine Zulaufleitung für Katholyt mit wenigstens einer Durchbrechung (21, 23) versehen ist.

10.   Elektrolyseur nach einem der Ansprüche 1 bis 9, **dadurch gekennzeichnet, dass** die Ablaufleitung (12) und/oder die Zulaufleitung als Einsteckrohr ausgebildet ist.

11.   Elektrolyseur nach einem der Ansprüche 1 bis 10, **dadurch gekennzeichnet, dass** die Ablaufleitung (12) in einen Leitungsverteiler (16) (header) der Elektrolysezelle eingesteckt oder eingehängt ist.

12.   Elektrolyseur nach Anspruch 11, **dadurch gekennzeichnet, dass** ein oberer Bereich der Ablaufleitung (12) in dem Leitungsverteiler (16) gehalten ist, die rohrförmige Ablaufleitung (12) aus dem Leitungsverteiler (16) nach unten hin herausragt und die Flüssigkeit (13) über Durchbrechungen (23) in der Ablaufleitung, die sich in einer Ebene unterhalb der Ebene des Leitungsverteilers (16) befinden, etwa radial und/oder anfänglich etwa seitlich austritt.

13. Elektrolyseur nach einem der Ansprüche 1 bis 12, **dadurch gekennzeichnet, dass** dieser für eine HCl-Elektrolyse, $H_2O$-Elektrolyse, Redox-Flow-Elektrolyse oder eine NaCl-Elektrolyse, insbesondere für eine NaCl-Elektrolyse mit Sauerstoffverzehrkathode vorgesehen ist.

14. Verfahren zum Betrieb eines Elektrolyseurs umfassend mindestens zwei elektrisch in Reihe geschaltete und miteinander über Zulauf- und Ablaufsysteme verbundene Elektrolysezellen (10, 11) wobei über das Zulauf- und Ablaufsystem ein mindestens zwei Elektrolysezellen versorgender Volumenstrom wenigstens eines Elektrolyten (15) fließt, wobei man einen wenigstens zeitweise diskontinuierlichen Volumenstrom (13) des Elektrolyten mit Tropfenbildung erzeugt, **dadurch gekennzeichnet, dass** man einen wenigstens zeitweise diskontinuierlichen Volumenstrom (13) des Elektrolyten mit Tropfenbildung dadurch erzeugt, dass man wenigstens eine Ablaufleitung (12) oder wenigstens eine Zulaufleitung so gestaltet, dass die Summe der Austrittsquerschnittsflächen ($A_3$) dieser Ablaufleitung (12) oder Zulaufleitung geringer ist als der Durchflussquerschnitt ($A_1$) stromaufwärts in dieser Ablaufleitung (12) oder Zulaufleitung, wobei die Ablaufleitung (12) oder die Zulaufleitung als Rohr ausgebildet ist, welches vertikal ausgerichtet ist oder dessen Rohrachse eine Winkelabweichung zur Senkrechten von maximal 40 ° hat, wobei das Rohr mit wenigstens einer Durchbrechung (21, 23) im Umfangsbereich ausgebildet ist.

15. Verfahren zum Betrieb eines Elektrolyseurs nach Anspruch 14, **dadurch gekennzeichnet, dass** der Elektrolyseur die Merkmale wenigstens eines der Ansprüche 1 bis 13 aufweist.

16. Verwendung eines Elektrolyseurs mit den Merkmalen eines der Ansprüche 1 bis 13 in der HCl-Elektrolyse, $H_2O$-Elektrolyse, Redox-Flow-Elektrolyse oder der NaCl-Elektrolyse, insbesondere in der NaCl-Elektrolyse mit Sauerstoffverzehrkathode.

**Claims**

1. Electrolyser comprising at least two electrolysis cells which are electrically connected in series and are connected to one another by means of supply and discharge systems, each electrolysis cell comprising at least one discharge line for electrolyte and each electrolysis cell comprising at least one feed line for electrolyte leading into the electrolysis cell, at least one discharge line (12) or at least one feed line being provided with at least one hole (23) through which electrolyte (15) flows out in an at least temporarily discontinuous volume flow (13) with drop formation, **characterized in that** the discharge line (12) or the feed line is configured as a tube which is oriented vertically or the tube axis of which has an angular deviation with respect to the perpendicular of a maximum of 40°, the tube being configured with at least one hole (21, 23) in the circumferential region.

2. Electrolyser according to Claim 1, **characterized in that** a number of two or more holes (21, 23) separated from one another and lying for instance next to one another or above one another or offset with respect to one another are provided in the circumferential region of a tubular discharge line (12) or feed line.

3. Electrolyser according to one of Claims 1 and 2, **characterized in that** at least a first hole (23) and at least a second hole (21), separated therefrom as seen in the axial direction of the feed line or the discharge line (12), are provided.

4. Electrolyser according to one of Claims 1 to 3, **characterized in that** at least two holes (21, 23) with different exit cross-sectional areas are provided in the same discharge line (12) or feed line.

5. Electrolyser according to one of Claims 2 to 4, **characterized in that** the sum of the exit cross-sectional areas ($A_3$) of the holes (23) in the same discharge line (12) or feed line is less than the flow cross section ($A_1$) upstream of the holes (23) in this discharge line (12) or feed line in which these holes (23) are located.

6. Electrolyser according to one of Claims 1 to 5, **characterized in that** it contains a gas-entraining or purely liquid electrolyte flow (15).

7. Electrolyser according to Claim 6, **characterized in that** in the case of a gas-entraining electrolyte flow (15), the discharge line (12) or feed line comprises at least one additional hole (21) in a region lying upstream of at least a first hole (23), the additional hole (21) being used in particular for gas exit of gas entrained in the electrolyte flow.

8. Electrolyser according to one of Claims 1 to 7, **characterized in that** it comprises electrolysis cells with an oxygen-depolarized cathode.

9. Electrolyser according to one of Claims 1 to 8, **characterized in that** at least one discharge line (12) or at least one feed line for anolyte and at least one discharge line (12) or at least one feed line for catholyte is provided with at least one hole (21, 23).

10. Electrolyser according to one of Claims 1 to 9, **characterized in that** the discharge line (12) and/or the feed line is formed as an insertion tube.

11. Electrolyser according to one of Claims 1 to 10, **characterized in that** the discharge line (12) is inserted or suspended in a line distributor (16) (header) of the electrolysis cell.

12. Electrolyser according to Claim 11, **characterized in that** an upper region of the discharge line (12) is held in the line distributor (16), the tubular discharge line (12) protrudes downwards out of the line distributor (16), and the liquid (13) emerges approximately radially and/or initially approximately laterally through holes (23) in the discharge line, which are located in a plane below the plane of the line distributor (16).

13. Electrolyser according to one of Claims 1 to 12, **characterized in that** it is provided for HCl electrolysis, $H_2O$ electrolysis, redox flow electrolysis or NaCl electrolysis, in particular for NaCl electrolysis with an oxygen-depolarized cathode.

14. Method for operating an electrolyser comprising at least two electrolysis cells (10, 11) which are electrically connected in series and are connected to one another by means of supply and discharge systems, a volume flow, supplying at least two electrolysis cells, of at least one electrolyte (15) flowing through the supply and discharge system, an at least temporarily discontinuous volume flow (13) of the electrolyte with drop formation being produced, **characterized in that** an at least temporarily discontinuous volume flow (13) of the electrolyte with drop formation is produced by configuring at least one discharge line (12) or at least one feed line in such a way that the sum of the exit cross-sectional areas ($A_3$) of this discharge line (12) or feed line is less than the flow cross section ($A_1$) upstream in this discharge line (12) or feed line, the discharge line (12) or the feed line is configured as a tube which is oriented vertically or the tube axis of which has an angular deviation with respect to the perpendicular of a maximum of 40°, the tube being configured with at least one hole (21, 23) in the circumferential region.

15. Method for operating an electrolyser according to Claim 14, **characterized in that** the electrolyser comprises the features of at least one of Claims 1 to 13.

16. Use of an electrolyser having the features of one of Claims 1 to 13 in HCl electrolysis, $H_2O$ electrolysis, redox flow electrolysis or NaCl electrolysis, particularly in NaCl electrolysis with an oxygen-depolarized cathode.

## Revendications

1. Électrolyseur comprenant au moins deux cellules électrolytiques connectées électriquement en série et reliées entre elles par le biais de systèmes d'alimentation et d'évacuation, dans lequel chaque cellule électrolytique comporte au moins une conduite d'évacuation pour l'électrolyte et chaque cellule électrolytique comporte au moins une conduite d'alimentation pour l'électrolyte menant à la cellule électrolytique, dans lequel au moins une conduite d'évacuation (12) ou au moins une conduite d'alimentation est pourvue d'au moins une ouverture (23) par le biais de laquelle l'électrolyte (15) s'écoule suivant un débit volumique (13) au moins temporairement discontinu avec formation de gouttes, **caractérisé en ce que** la conduite d'évacuation (12) ou la conduite d'alimentation est réalisée sous la forme d'un tube orienté verticalement ou dont l'axe de tube présente un écart angulaire par rapport à la verticale de 40° au maximum, dans lequel le tube est réalisé de manière à présenter au moins une ouverture (21, 23) dans la zone périphérique.

2. Électrolyseur selon la revendication 1, **caractérisé en ce qu'**un nombre de deux ouvertures (21, 23), ou plus, espacées les unes des autres, qui sont situées approximativement l'une à côté de l'autre ou l'une au-dessus de l'autre ou décalées l'une par rapport à l'autre, est prévu dans la zone périphérique d'une conduite d'évacuation (12) ou d'une conduite d'alimentation tubulaire.

3. Électrolyseur selon l'une des revendications 1 ou 2, **caractérisé en ce qu'**il est prévu au moins une première ouverture (23) et au moins une deuxième ouverture (21) espacée de celle-ci, telles que vues dans la direction axiale de la conduite d'alimentation ou de la conduite d'évacuation (12).

4. Électrolyseur selon l'une des revendications 1 à 3, **caractérisé en ce qu'**il est prévu au moins deux ouvertures (21, 23) présentant des sections transversales de sortie différentes dans la même conduite d'évacuation (12) ou la même conduite d'alimentation.

5. Électrolyseur selon l'une des revendications 2 à 4, **caractérisé en ce que** la somme des sections transversales de sortie ($A_3$) des ouvertures (23) dans la même conduite d'évacuation (12) ou la même conduite d'alimentation est inférieure à la section transversale d'écoulement ($A_1$) en amont des ouvertures (23) dans ladite conduite d'évacuation (12) ou ladite conduite d'alimentation, dans laquelle se trouvent lesdites ouvertures (23).

6. Électrolyseur selon l'une des revendications 1 à 5, **caractérisé en ce qu'**il contient un courant d'électrolyte porteur de gaz ou purement liquide (15).

7. Électrolyseur selon la revendication 6, **caractérisé en ce que**, dans le cas d'un courant d'électrolyte (15) porteur de gaz, la conduite d'évacuation (12) ou la conduite d'alimentation présente au moins une ouverture (21) supplémentaire dans une zone située en amont d'au moins une première ouverture (23), dans lequel l'ouverture (21) supplémentaire sert en particulier à une sortie de gaz du gaz entraîné dans le courant d'électrolyte.

8. Électrolyseur selon l'une des revendications 1 à 7, **caractérisé en ce qu'**il comprend des cellules électrolytiques pourvues d'une cathode consommatrice d'oxygène.

9. Électrolyseur selon l'une des revendications 1 à 8, **caractérisé en ce qu'**au moins une conduite d'évacuation (12) ou au moins une conduite d'alimentation pour l'anolyte et au moins une conduite d'évacuation (12) ou au moins une conduite d'alimentation pour le catholyte est pourvue d'au moins une ouverture (21, 23).

10. Électrolyseur selon l'une des revendications 1 à 9, **caractérisé en ce que** la conduite d'évacuation (12) et/ou la conduite d'alimentation est/sont réalisée(s) sous la forme d'un tube d'insertion.

11. Électrolyseur selon l'une des revendications 1 à 10, **caractérisé en ce que** la conduite d'évacuation (12) est insérée ou suspendue dans un répartiteur d'amenée (16) (header) de la cellule électrolytique.

12. Électrolyseur selon la revendication 11, **caractérisé en ce qu'**une zone supérieure de la conduite d'évacuation (12) est maintenue dans le répartiteur d'amenée (16), la conduite d'évacuation tubulaire (12) fait saillie vers le bas à partir du répartiteur d'amenée (16) et le liquide (13) sort approximativement radialement et/ou initialement approximativement latéralement par le biais des ouvertures (23) dans la conduite d'évacuation, lesquels ouvertures se trouvent dans un plan situé en dessous du plan du répartiteur d'amenée (16).

13. Électrolyseur selon l'une des revendications 1 à 12, **caractérisé en ce que** celui-ci est prévu pour une électrolyse HCl, une électrolyse $H_2O$, une électrolyse à flux redox ou une électrolyse NaCl, en particulier pour une électrolyse NaCl avec une cathode consommatrice d'oxygène.

14. Procédé de fonctionnement d'un électrolyseur comprenant au moins deux cellules électrolytiques (10, 11) connectées électriquement en série et reliées entre elles par le biais de systèmes d'alimentation et d'évacuation, dans lequel un débit volumique d'au moins un électrolyte (15) alimentant au moins deux cellules électrolytiques circule par le biais du système d'alimentation et d'évacuation, dans lequel on génère un débit volumique (13) au moins temporairement discontinu de l'électrolyte avec formation de gouttes, **caractérisé en ce qu'**on génère un débit volumique (13) au moins temporairement discontinu de l'électrolyte avec formation de gouttes en configurant au moins une conduite d'évacuation (12) ou au moins une conduite d'alimentation de manière à ce que la somme des sections transversales de sortie ($A_3$) de ladite conduite d'évacuation (12) ou de ladite conduite d'alimentation soit inférieure à la section transversale d'écoulement ($A_1$) en amont dans ladite conduite d'évacuation (12) ou ladite conduite d'alimentation, dans lequel la conduite d'évacuation (12) ou la conduite d'alimentation est réalisée sous la forme d'un tube orienté verticalement ou dont l'axe de tube présente un écart angulaire par rapport à la verticale de 40° au maximum, dans lequel le tube est réalisé de manière à présenter au moins une ouverture (21, 23) dans la zone périphérique.

15. Procédé de fonctionnement d'un électrolyseur selon la revendication 14, **caractérisé en ce que** l'électrolyseur présente les caractéristiques d'au moins l'une des revendications 1 à 13.

16. Utilisation d'un électrolyseur présentant les caractéristiques de l'une des revendications 1 à 13 dans l'électrolyse HCl, l'électrolyse $H_2O$, l'électrolyse à flux redox ou l'électrolyse NaCl, en particulier dans l'électrolyse NaCl avec cathode consommatrice d'oxygène.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005027735 A1
- DE 102010054643 A1
- DE 3434328 A1
- DE 3434328